# FASCICULE DE BREVET EUROPEEN

(11) **EP 2 715 857 B1**
(45) Date de publication et mention de la délivrance du brevet: **01.07.2015**
(21) Numéro de dépôt: 12725368.0
(22) Date de dépôt: 29.05.2012
(51) Int. Cl.: H01M 10/0525, H01M 10/0585, H01M 10/04, H01M 2/16, H01M 2/18

(54) **PROCEDE SEMI-AUTOMATIQUE DE REALISATION D'UN ACCUMULATEUR ELECTROCHIMIQUE LI-ION**
HALBAUTOMATISCHES VERFAHREN ZUR HERSTELLUNG EINER ELEKTROCHEMISCHEN LI-IONENBATTERIEN
SEMI-AUTOMATIC METHOD FOR MANUFACTURING AN ELECTROCHEMICAL LI-ION BATTERY

(30) Priorité: 31.05.2011 FR 1154767
(43) Date de publication de la demande: 09.04.2014
(73) Titulaire: Commissariat à l'Énergie Atomique et aux Énergies Alternatives, 75015 Paris (FR)
(72) Inventeur: BOUVIER, Michaël, F-38760 Varces Allieres Et Risset (FR)
(74) Mandataire: Ahner, Philippe
(86) Numéro de dépôt international: PCT/EP2012/059948
(87) Numéro de publication internationale: WO 2012/163881

(56) Documents cités:
- EP-A1- 2 317 594
- EP-B1- 1 177 591
- WO-A1-2004/097971
- WO-A1-2007/021083
- WO-A1-2008/130175

## Description

### DOMAINE TECHNIQUE

La présente invention concerne le domaine des générateurs électrochimiques au lithium, qui fonctionnent selon le principe d'insertion ou de désinsertion, ou autrement dit intercalation-désintercalation, de lithium dans au moins une électrode.

Elle concerne plus particulièrement un accumulateur électrochimique Lithium-ion (Li-ion en abrégé) et a trait à un nouveau procédé de réalisation d'un tel accumulateur.

### ART ANTÉRIEUR

Pour réaliser les accumulateurs électrochimiques Li-ion, il est connu de procéder soit par bobinage, soit par empilement aussi appelé « stack » en anglais.

Le « stack » peut se faire soit de manière entièrement manuelle avec l'aide de dispositifs assembleurs qui servent de guides aux différents constituants (électrodes, séparateur électrolytique, collecteurs de courant) du coeur électrochimique, soit de manière entièrement automatisée, ce qui nécessite alors un équipement complexe et coûteux.

Le bobinage peut quant à lui se faire avec un équipement beaucoup plus simple, nécessitant seulement un dérouleur pour dérouler les séparateurs, un plateau par électrode de polarité donnée supportée par un collecteur de courant, et un mandrin permettant le bobinage de l'ensemble. L'inconvénient de cette méthode actuellement utilisée est que les électrodes avec leurs collecteurs de courant support doivent êtres suffisamment souples. En effet, leur bobinage implique par définition leur pliage selon un angle de courbure plus ou moins important. Or, en fonction du matériau d'électrode et du collecteur de courant support associé, de leur grammage et leur porosité, certaines électrodes données avec leur collecteur de courant associé ne peuvent être pliées.

Aussi, jusqu'à présent, certaines électrodes avec leur collecteur de courant associé ne peuvent être assemblées que par une méthode d'empilement entièrement manuelle. L'inconvénient de cette méthode d'empilement entièrement manuelle est qu'elle nécessite aussi une manipulation à la main du séparateur électrolytique avec les étapes afférentes de découpe et d'empilement individuelles. Or, intrinsèquement, le séparateur électrolytique le plus couramment utilisé dans les accumulateurs Li-ion, est en un matériau très fin et très fragile, typiquement de l'ordre de 1 à 50µm d'épaisseur. Aussi, toute manipulation entraîne un risque de perforation, et donc de court-circuit par la suite du coeur électrochimique.

En outre, les électrodes ne pouvant pas êtres pliées et donc bobinées sont généralement gondolées (défauts de planéité) et, de fait, le maintien des différentes strates, lors de la phase de l'empilement est délicat. Enfin, toutes les étapes manuelles indiquées ci-dessus sont relativement longues car il est nécessaire de positionner chaque constituant par rapport à tous les autres : positionnement du séparateur électrolytique par rapport à l'électrode positive supportée par son collecteur, cette dernière par rapport à l'électrode négative, et ainsi de suite pour chaque strate.

Des solutions intermédiaires pour tenter de pallier les problèmes évoqués ci-dessus ont déjà été proposées: il s'agit en quelque sorte d'une méthode mixte d'empilement et bobinage. Ces solutions sont décrites dans la demande de brevet KR20080036250 ou encore le brevet EP1177591B1. L'inconvénient majeur des solutions décrites dans ces documents est qu'elle consiste à empiler et bobiner des électrodes déjà empilées au préalable entre elles. Cela implique nécessairement une manipulation manuelle du séparateur électrolytique pour l'empilement au préalable. En outre, la méthode de bobinage montrée dans la demande de brevet KR20080036250 semble entièrement manuelle, c'est-à-dire sans mise en oeuvre d'une bobineuse.

Le but de l'invention est donc de proposer un procédé de réalisation d'un accumulateur électrochimique Li-ion qui ne présente pas tout ou partie des inconvénients précités.

Autrement dit, le but de l'invention est de proposer un nouveau procédé de réalisation d'un accumulateur électrochimique Li-ion qui ne soit ni un procédé de bobinage entièrement automatisé, ni un procédé par empilement entièrement manuel, ni un procédé mixte d'empilement et de bobinage tels que ceux proposés dans la demande de brevet KR20080036250 ou dans le brevet EP1177591B1 précité.

### EXPOSÉ DE L'INVENTION

Pour ce faire, l'invention a pour objet un procédé de réalisation d'un accumulateur électrochimique lithium-ion, comprenant les étapes suivantes :
a/ réalisation d'une pluralité d'électrodes, dites biface, comprenant chacune un substrat électriquement conducteur formant un collecteur de courant supportant sur ses deux faces opposées un matériau d'électrode de même polarité donnée; la pluralité d'électrodes étant divisée en deux groupes, l'un des groupes comprenant des électrodes de polarité opposée à celles de l'autre groupe,
a'/ réalisation de deux électrodes, dites monoface, comprenant chacune un substrat électriquement conducteur formant un collecteur de courant supportant sur une seule de ses faces un matériau d'électrode de polarité donnée, les deux électrodes monoface supportant un seul matériau d'électrode étant de même polarité,
b/ déroulement d'un séparateur électrolytique sous la forme d'une bande continue depuis une bobineuse de sorte à le positionner sur un bord d'un mandrin à deux bords parallèles,
c/ positionnement manuel d'une première électrode biface d'un des groupes sur le bord du mandrin parallèle à celui sur lequel la bande continue de séparateur est déjà positionnée,
d/ rotation du mandrin de sorte à envelopper la première électrode biface dudit groupe et le mandrin avec la bande continue de séparateur,
e/ positionnement manuel d'une première électrode biface de l'autre groupe sur le bord du mandrin sur lequel la bande continue de séparateur est positionnée,
f/ rotation du mandrin dans le même sens que celui de l'étape c/ de sorte à envelopper également la première électrode biface de l'autre groupe avec la bande continue de séparateur,
g/ réitération des étapes c/ à f/ avec toutes les autres électrodes réalisées selon les étapes a/ et a' / de sorte à avoir celles-ci empilées sur le mandrin avec chacune des électrodes monoface agencée à l'une des extrémités de l'empilement, toutes les électrodes étant enveloppées par la bande continue de séparateur, cette dernière séparant également deux électrodes adjacentes et de polarité opposée entre elles.

Autrement dit, l'invention consiste en quelque sorte à réaliser un bobinage automatique à partir d'une bande continue de séparateur électrolytique associé à un positionnement manuel de toutes les électrodes de l'empilement final sans qu'il y ait lieu déjà au préalable d'empiler manuellement une partie des constituants avec des séparateurs distincts.

Autrement dit encore, l'invention consiste à bobiner de manière automatique un séparateur sous forme de bande continue sur des électrodes biface d'une même polarité, chaque électrode biface et en final chaque électrode monoface étant positionnée manuellement pour constituer un empilement.

Par automatique, on entend que l'enroulement peut être motorisé ou bien entrainé à la main via une manivelle par exemple, mais nécessairement par l'intermédiaire d'une bobineuse.

Ainsi, le séparateur sous la forme d'une bande continue étant initialement bobiné sur une bobineuse qui elle-même permet le bobinage automatique de la bande, aucune manipulation manuelle du séparateur n'est nécessaire. Les électrodes biface et monoface utilisées pour la mise en oeuvre de l'invention peuvent être découpées au préalable, et du fait qu'elles sont empilées manuellement selon l'invention, il est possible d'utiliser des électrodes dont le matériau et/ou le grammage et/ou la porosité ne leur permet pas d'être bobinées.

En outre, l'utilisation d'une bobineuse permet de conserver une précision de positionnement des constituants et une rapidité d'assemblage de l'accumulateur Li-ion visé.

Une fois l'étape f/ effectuée, on effectue de préférence, une étape de retrait de l'empilement du mandrin puis une étape de découpe de la bande continue de séparateur à la périphérie des électrodes de sorte à laisser uniquement des parties de bande sur les électrodes monoface et séparer individuellement deux électrodes adjacentes et de polarité opposées entre elles.

Selon une variante avantageuse, chaque étape b/ de déroulement est effectuée depuis un enrouleur de sortie d'une bobineuse-refendeuse sur lequel la bande continue refendue au préalable est bobinée.

Avantageusement, chaque étape b/ de déroulement est effectuée en maintenant la tension de la bande continue de séparateur entre 0,5 et 3 N pour une épaisseur de cette dernière comprise entre 1 et 50µm. Avec ses valeurs, on obtient un bon maintien sous tension en permanence sans risque de perforation du séparateur.

Selon un mode de réalisation avantageux,
- on effectue les étapes a/ et a'/ avec une partie de chaque collecteur de courant qui fait saillie des zones supportant les matériaux d'électrode en formant une languette,
- on effectue les étapes c/ à g/ avec les languettes agencées dans un plan sensiblement orthogonal à la direction d'enroulement du séparateur ;
- une fois l'étape g/ effectuée, on effectue une étape h/ au cours de laquelle on réunit et on soude entre elles toutes les languettes de collecteurs de courant d'électrodes d'une même polarité et avec une languette de plus grande épaisseur, les deux languettes de plus grande épaisseur formant les pôles de l'accumulateur.

Pour finaliser l'accumulateur selon l'invention, une fois l'étape h/ effectuée, on enveloppe avec un emballage étanche, l'empilement des électrodes avec les parties de bande de séparateur électrolytique séparant individuellement deux électrodes adjacentes et de polarité opposées entre elles, tout en laissant traversé l'emballage par les pôles.

L'invention concerne également un accumulateur Li-ion obtenu selon le procédé défini ci-dessus, dans lequel toutes les électrodes à polarité négative sont à base de graphite et toutes les électrodes à polarité positive sont en LiFePO4.

Selon une variante, les deux pôles sont agencés en faisant saillie d'un même côté de l'emballage.

Selon une variante alternative, les deux pôles sont agencés en faisant saillie chacun d'un côté différent de l'emballage.

L'emballage de l'accumulateur selon l'invention peut être de type souple ou de type rigide.

### BRÈVE DESCRIPTION DES DESSINS

D'autres avantages et caractéristiques de l'invention ressortiront mieux à la lecture de la description détaillée suivante faite à titre illustratif et non limitatif en référence aux figures suivantes :
- les figures 1A à 1C montrent les différentes étapes de réalisation d'une électrode monoface ou biface utilisées dans le procédé de réalisation d'un accumulateur Li-ion selon l'invention,
- les figures 2A à 2C montrent en vue de face les différentes étapes du procédé de réalisation d'un accumulateur Li-ion selon l'invention,
- la figure 3 montre en vue de face l'accumulateur Li-ion une fois les étapes du procédé selon l'invention effectuées et le mandrin enlevé,
- la figure 4 montre en vue de profil l'accumulateur Li-ion de la figure 3,
- les figures 5A et 5B montrent respectivement en vue dé dessus et de profil l'accumulateur selon la figure 4, une fois l'étape de connexion électrique aux pôles effectuée mais avant réalisation d'un emballage,
- les figures 6A et 6B montrent en vue de dessus une variante de connexion électrique des figures 5A et 5B, respectivement avant et après réalisation d'un emballage.

### EXPOSÉ DÉTAILLÉ DE MODES DE RÉALISATION PARTICULIERS

On précise ici que, dans la description détaillée, tous les collecteurs de courant portent la même référence 1 à des fins de clarté : ces collecteurs de courant peuvent bien entendus être différents pour une électrode positive et une électrode négative.

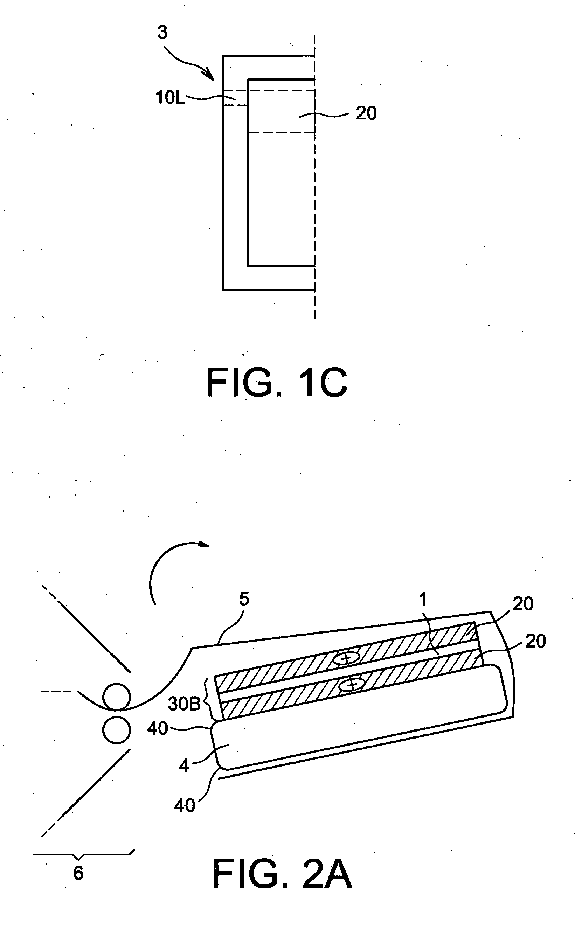

On précise également que sur les figures 2A à 2C, la flèche incurvée indique le sens du rotation du mandrin.

On précise également, que toutes les électrodes d'une même polarité portent la même référence 20 pour celles positives et 21 pour celles négatives. On considère ainsi que toutes les électrodes d'une même polarité sont réalisées dans le même matériau, avec le même grammage et la même porosité. Il va de soi que des matériaux et/ou grammage et/ou porosité distincts peuvent convenir dans le cadre de l'invention pour des électrodes de même polarité et empilées manuellement pour obtenir l'accumulateur Li-ion selon l'invention.

De manière préférée, pour réaliser un accumulateur selon l'invention, on peut associer :
- des électrodes positives 20 à base de LiFePO4, d'une capacité surfacique de l'ordre de 5mAh/cm², enduites sur une ou les deux faces d'un collecteur d'aluminium 1 de 10 à 40 µm d'épaisseur et de 100 à 600 mm de largeur ;
- des électrodes négatives 21, à base de graphite, d'une capacité surfacique de l'ordre de 5,5mAh/cm², enduites sur une ou les deux faces d'un collecteur de cuivre 1 de 10 à 40 µm d'épaisseur et de 100 à 600 mm de largeur.

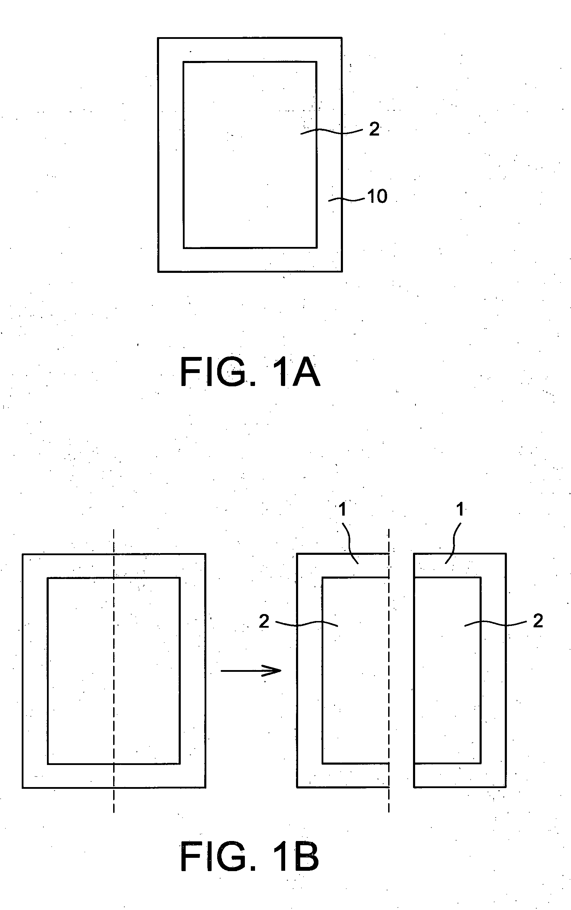

Au préalable, pour réaliser ces électrodes monoface 3M⁻, 3M⁻ ou biface 3B⁻, 3B⁺, on peut procéder avantageusement de la manière suivante. On enduit une des faces ou les deux faces d'un substrat formant le collecteur de courant 1, avec une encre à base de matériau d'électrode positive ou négative et sur une largeur plus faible que celle du collecteur. On obtient ainsi une électrode 2 positionnée et de préférence de manière centrée sur le collecteur de courant 1 en laissant un cadre nu périphérique 10 (figure 1A).

Puis, on refend en deux le support 1, 2 obtenu (figure 1B) et on découpe ensuite des électrodes 3 individuellement en laissant une languette 10_{L} de collecteur 1 s'étendre à la périphérie (figure 1B). Les électrodes 3 ainsi obtenues peuvent être alors assemblées conformément au procédé selon l'invention.

On précise qu'on refend à l'aide d'une refendeuse, au préalable de l'assemblage proprement dit, un séparateur électrolytique au minimum à la largeur correspondante des électrodes 3 elles-mêmes toutes de même largeur. On obtient ainsi plusieurs bandes continues de séparateur électrolytique, et chaque bande continue 5 ainsi découpée est enroulée sur une broche en sortie de refendeuse, broche qui peut être mise par la suite en entrée de la bobineuse.

Autrement dit, toutes ces étapes de découpe et d'enroulement d'un séparateur électrolytique peuvent être effectuées de manière automatique dans une même bobineuse-refendeuse.

La bande continue de séparateur électrolytique 5 est déroulée dans un premier temps de la bobineuse-refendeuse 6 et positionnée sur l'un 40 des deux bords parallèles du mandrin 4 de la machine.

On positionne alors manuellement une première électrode biface positive 30B⁺ obtenue comme décrit, ci-dessus sur le bord 41 du mandrin parallèle au bord 40 du mandrin sur lequel la bande continue 5 de séparateur est déjà positionnée. On effectue alors une rotation du mandrin 4 pour envelopper sous tension ainsi à la fois le mandrin 4 et la première électrode biface positive 30B⁺ (figure 2A).

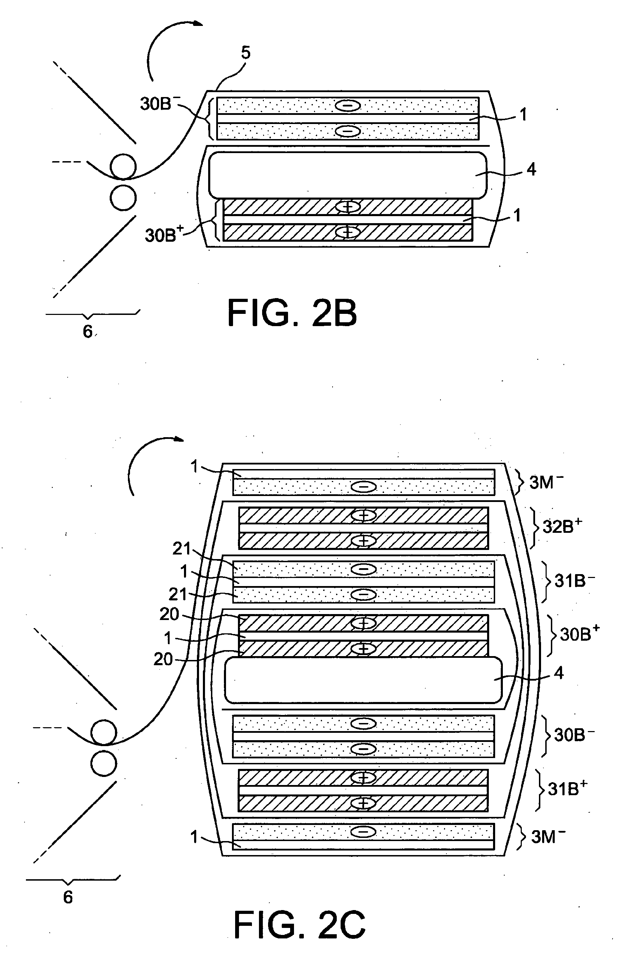

On effectue alors une rotation du mandrin 4 à 180° et toujours dans le même sens et on positionne alors manuellement une première électrode biface négative 30B⁻ obtenue comme décrit ci-dessus la portion de bande continue 5 de séparateur déjà positionnée sur le bord 40 du mandrin 4 (figure 2B).

On réitère ces étapes de bobinage automatique avec rotation à chaque fois du mandrin toujours dans le même sens et à 180° tout en maintenant le séparateur 5 sous tension et en empilant alternativement et manuellement des électrodes biface positive 30B⁺ et négative 31B⁻ les unes sur les autres et aux extrémités de l'empilement les électrodes monoface négative 3M⁻, 3M⁻. On obtient ainsi l'empilement complet des électrodes 3 enveloppées par le séparateur 5, celui-ci séparant individuellement deux électrodes adjacentes et de polarité opposée, à savoir les électrodes référencées 30B⁺, 31B⁻; 31B⁻, 32B⁺; 32B⁺, 3M⁻ d'un côté du mandrin 4 et celles référencées 30B⁻, 31B⁺ ; 31B⁺, 3M⁻ de l'autre côté du mandrin 4 (figure 2C).

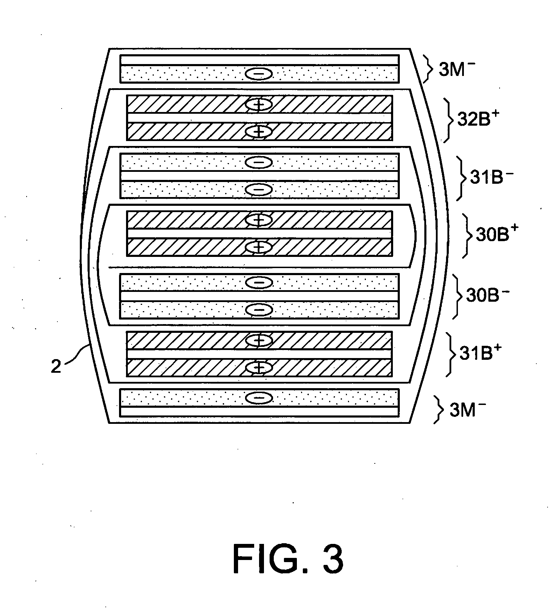

On découpe alors la bande 5 de séparateur en sortie de bobineuse 6 puis on retire l'empilement obtenu du mandrin 4 (figure 3).

Le séparateur est en effet solidarisé par tout moyen, un simple adhésif par exemple, à la patte collectrice de la première électrode. De cette manière, le séparateur reste en place et tendu lors du retrait ou enlèvement du mandrin.

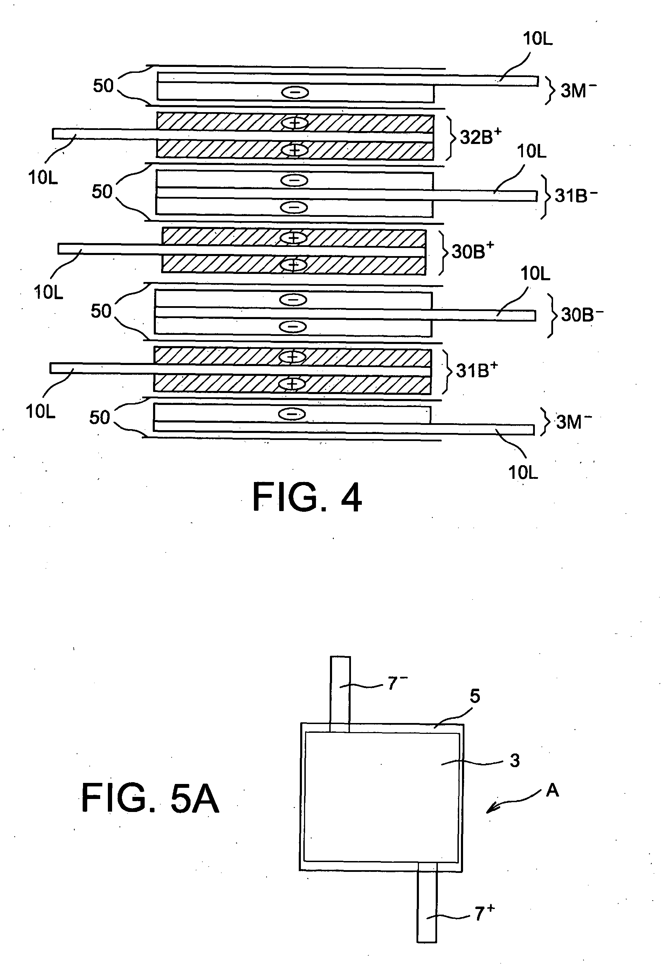

On découpe alors le séparateur 5 au niveau de la périphérie de chaque électrode pour ne laisser que des parties 50 de séparateur électrolytique intercalées individuellement entre deux électrodes de polarité opposées et au dessus des électrodes monoface 3M⁻ aux extrémités de l'empilement (figure 4). Cette étape de découpe peut être réalisée par un moyen de découpe approprié, tel qu'un scalpel ou un massicot.

En tant que séparateur, on peut prévoir un séparateur en polyfluorure de vinylidène (PvDF), en polypropylène (PP) ou en polyéthylène (PE). L'électrolyte assurant la conduction ionique entre les électrodes peut être liquide, par exemple à base de carbonate ou tout autre composé stable aux potentiels envisagés et permettant la dissolution d'un sel de lithium (par exemple LiPF6).

Comme mieux visible en figure 4, les languettes 10_{L} des collecteurs de courant créés initialement lors de l'étape de refente des électrodes s'étendent individuellement sur un des côtés de l'empilement qui a été laissé libre de l'enroulement du séparateur 5. Sur cette figure 4, toutes les languettes 10L⁺ des collecteurs de courant d'électrode positive 30B⁺, 31B⁺, 32B⁺ s'étendent sur un bord opposé à celui sur lequel s'étendent les languettes 10L⁻ des collecteurs de courant d'électrode négative 30B⁻, 31B^{- +}, 3M⁻, 3M⁻.

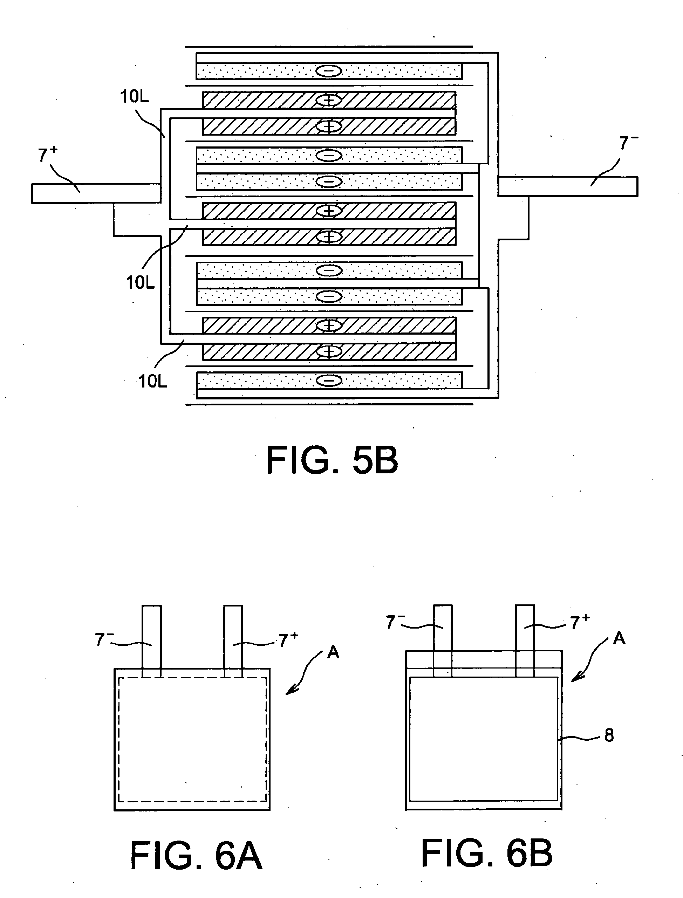

Les languettes 10L⁺, 10L⁻ de même polarité sont alors rassemblées entre elles, en sus d'une languette 7⁺, 7⁻ plus épaisse, typiquement comprise entre 50µm et 1mm. Toutes les languettes d'une même polarité 10L⁻, 7⁻ ; 10L⁺, 7⁺ sont alors soudées entre elles (figures 5A et 5B). Ces soudures peuvent réalisées par ultrason, soudure électrique ou encore soudure laser. Les languettes plus épaisses 7+, 7-constituent les connexions électriques de sortie ou pôles de l'accumulateur Li-ion selon l'invention.

Une autre variante de réalisation des pôles 7+, 7- d'un accumulateur selon l'invention est montrée en figure 6A : les pôles s'étendent dans ce cas sur un même bord de l'accumulateur A selon l'invention.

L'accumulateur Li-ion obtenu peut alors être emballé avec étanchéité comme usuellement dans un emballage de type souple ou rigide, seules les languettes 7+, 7- constituant les pôles faisant saillie hors de l'emballage 8 (figure 6B).

L'invention qui vient d'être décrite permet avantageusement d'assembler un accumulateur Li-ion A même avec des électrodes dont le matériau et/ou le grammage et/ou la porosité ne permet (tent) pas intrinsèquement de les plier selon une quelconque courbure et ce sans devoir manipuler manuellement, c'est-à-dire découper et assembler, les séparateurs électrolytiques. De plus, grâce au procédé selon l'invention, le séparateur électrolytique sous forme de bande continue peut être maintenu tendu en permanence lors de son déroulement pour envelopper les électrodes ce qui assure un empilement compact avec une bonne cohésion entre ses différents constituants.

D'autres modes de réalisation peuvent être envisagés sans pour autant sortir du cadre de l'invention. Par exemple, si l'accumulateur Li-ion représenté comprend trois électrodes biface positive, deux électrodes biface négative et deux électrodes monoface négative, on peut bien entendu envisager de réaliser un accumulateur aux caractéristiques identiques mais avec trois électrodes biface négative, deux électrodes biface positive et deux électrodes monoface positive. On peut aussi grâce à l'invention envisager d'autres accumulateurs avec des caractéristiques de capacité, tension et énergie différentes.

## Revendications

1. Procédé de réalisation d'un accumulateur électrochimique lithium-ion, comprenant les étapes suivantes :
a/ réalisation d'une pluralité d'électrodes, dites biface, comprenant chacune un substrat électriquement conducteur formant un collecteur de courant supportant sur ses deux faces opposées un matériau d'électrode de même polarité donnée; la pluralité d'électrodes étant divisée en deux groupes, l'un des groupes comprenant des électrodes (30B⁺, 31B⁺, 32B⁺) de polarité opposée à celles (30B⁻, 31B⁻) de l'autre groupe,
a'/ réalisation de deux électrodes, dites monoface, comprenant chacune un substrat électriquement conducteur formant un collecteur de courant supportant sur une seule de ses faces un matériau d'électrode de polarité donnée, les deux électrodes mono face (3M⁻, 3M⁻) supportant un seul matériau d'électrode étant de même polarité ;
b/ déroulement d'un séparateur électrolytique (5) sous la forme d'une bande continue depuis une bobineuse (6) de sorte à le positionner sur un bord (40) d'un mandrin (4) à deux bords parallèles,
c/ positionnement manuel d'une première électrode biface (30B⁺) d'un des groupes sur le bord (41) du mandrin parallèle à celui (40) sur lequel la bande continue de séparateur est déjà positionnée,
d/ rotation du mandrin de sorte à envelopper la première électrode biface dudit groupe et le mandrin avec la bande continue de séparateur,
e/ positionnement manuel d'une première électrode biface (30B⁻) de l'autre groupe sur le bord du mandrin sur lequel la bande continue de séparateur est positionnée,
f/ rotation du mandrin dans le même sens que celui de l'étape c/ de sorte à envelopper également la première électrode biface de l'autre groupe avec la bande continue de séparateur,
g/ réitération des étapes c/ à f/ avec toutes les autres électrodes (30B⁺, 31B⁺, 32B⁺, 30B⁻, 31B⁻, 3M⁻, 3M⁻) réalisées selon les étapes a/ et a'/ de sorte à avoir celles-ci empilées sur le mandrin avec chacune des électrodes monoface (3M⁻, 3M⁻) agencée à l'une des extrémités de l'empilement, toutes les électrodes étant enveloppées par la bande continue de séparateur, cette dernière (5) séparant également deux électrodes adjacentes et de polarité opposée entre elles.

2. Procédé de réalisation d'un accumulateur lithium-ion selon la revendication 1, selon lequel, une fois l'étape f/ effectuée, on effectue une étape de retrait de l'empilement du mandrin puis une étape de découpe de la bande continue de séparateur à la périphérie des électrodes de sorte à laisser uniquement des parties (50) de bande sur les électrodes monoface (3M⁻, 3M⁻) et séparer individuellement deux électrodes adjacentes et de polarité opposées entre elles.

3. Procédé de réalisation d'un accumulateur lithium-ion selon la revendication 1 ou 2, selon lequel chaque étape b/ de déroulement est effectuée depuis un enrouleur de sortie d'une bobineuse-refendeuse (6) sur lequel la bande continue refendue au préalable est bobinée.

4. Procédé de réalisation d'un accumulateur lithium-ion selon la revendication 1 à 3, selon lequel chaque étape b/ de déroulement est effectuée en maintenant la tension de la bande continue (5) de séparateur entre 0,5 et 3 N pour une épaisseur de cette dernière comprise entre 1 et 50µm.

5. Procédé de réalisation d'un accumulateur lithium-ion selon l'une des revendications précédentes, selon lequel :
- on effectue les étapes a/ et a'/ avec une partie de chaque collecteur de courant qui fait saillie des zones supportant les matériaux d'électrode en formant une languette (10L),
- on effectue les étapes c/ à g/ avec les languettes (10L) agencées dans un plan sensiblement orthogonal à la direction d'enroulement du séparateur,
- une fois l'étape g/ effectuée, on effectue une étape h/ au cours de laquelle on réunit et on soude entre elles toutes les languettes de collecteurs de courant d'électrodes d'une même polarité et avec une languette (7⁺, 7⁻) de plus grande épaisseur, les deux languettes de plus grande épaisseur formant les pôles de l'accumulateur.

6. Procédé de réalisation d'un accumulateur lithium-ion selon la revendication 5, selon lequel, une fois l'étape h/ effectuée, on enveloppe avec un emballage étanche (8), l'empilement des électrodes avec les parties de bande de séparateur électrolytique séparant individuellement deux électrodes adjacentes et de polarité opposées entre elles, tout en laissant traversé l'emballage par les pôles (7⁺, 7⁻).

7. Accumulateur Li-ion (A) obtenu selon le procédé de la revendication 6, dans lequel toutes les électrodes à polarité négative sont à base de graphite et toutes les électrodes à polarité positive sont en LiFePO4.

8. Accumulateur Li-ion (A) obtenu selon le procédé de la revendication 7, dans lequel les deux pôles sont agencés en faisant saillie d'un même côté de l'emballage.

9. Accumulateur Li-ion (A) obtenu selon le procédé de la revendication 7, dans lequel les deux pôles sont agencés en faisant saillie chacun d'un côté différent de l'emballage.

10. Accumulateur Li-ion selon l'une des revendications 7 à 9, dans lequel l'emballage est de type souple ou de type rigide.

## Patentansprüche

1. Verfahren zum Herstellen einer elektrochemischen Lithium-Ionen-Batterie, umfassend die nachfolgenden Schritte:
a/ Herstellen einer Mehrzahl von Elektroden, sogenannte zweiseitige Elektroden, die jeweils ein elektrisch leitfähiges Substrat aufweisen, das einen Strom kollektor bildet, der auf seinen beiden entgegengesetzten Seiten ein Elektrodenmaterial mit gegebener gleicher Polarität trägt, wobei die Mehrzahl von Elektroden in zwei Gruppen aufgeteilt ist, wobei die eine Gruppe Elektroden (30B⁺, 31B⁺, 32B⁺) mit zu denen der anderen Gruppe (30B⁻, 31B⁻) entgegengesetzter Polarität aufweist,
a'/ Herstellen von zwei Elektroden, sogenannte einseitige Elektroden, die jeweils ein elektrisch leitfähiges Substrat aufweisen, das einen Stromkollektor bildet, der auf nur einer seiner Seiten ein Elektrodenmaterial mit gegebener Polarität trägt, wobei die beiden einseitigen Elektroden (3M⁻, 3M⁻) nur ein Elektrodenmaterial gleicher Polarität tragen,
b/ Abwickeln eines elektrolytischen Separators (5) in Form eines durchgehenden Bandes von einer Wickelvorrichtung (6), so dass er an eine Randkante (40) eines Dorns (4) mit zwei parallelen Randkanten positioniert wird,
c/ manuelles Positionieren einer ersten zweiseitigen Elektrode (30B⁺) einer der Gruppen an die Randkante (41) des Dorns, die parallel zu derjenigen (40) verläuft, an welcher das durchgehende Separatorband bereits positioniert ist,
d/ Drehen des Dorns, so dass die erste zweiseitige Elektrode der Gruppe und der Dorn mit dem durchgehenden Separatorband umwickelt werden,
e/ manuelles Positionieren einer ersten zweiseitigen Elektrode (30B⁻) der anderen Gruppe an die Randkante des Dorns, an welcher das durchgehende Separatorband bereits positioniert ist,
f/ Drehen des Dorns in der gleichen Richtung wie bei Schritt c/, so dass auch die erste zweiseitige Elektrode der anderen Gruppe mit dem durchgehenden Separatorband umwickelt wird,
g/ Wiederholen der Schritte c/ bis f/ mit allen weiteren Elektroden (30B⁺, 31B⁺, 32B⁺, 30B⁻, 31B⁻, 3M⁻, 3M⁻), die gemäß der Schritte a/ und a'/ erfolgt sind, so dass sie auf den Dorn aufgestapelt werden und dabei jede der einseitigen Elektroden (3M⁻, 3M⁻) an einem der Enden der Stapelung angeordnet wird, wobei sämtliche Elektroden mit dem durchgehenden Separatorband umwickelt werden, wobei letzteres (5) auch zwei aneinandergrenzende Elektroden mit zueinander entgegengesetzter Polarität trennt.

2. Verfahren zum Herstellen einer Lithium-Ionen-Batterie nach Anspruch 1, wobei nach erfolgtem Schritt f/ ein Schritt des Abziehens der Stapelung von dem Dorn und dann ein Schritt des Abschneidens des durchgehenden Separatorbandes am Umfang der Elektroden erfolgen, so dass nur Teile (50) des Bandes an den einseitigen Elektroden (3M⁻, 3M⁻) verbleiben und zwei aneinandergrenzende Elektroden mit zueinander entgegengesetzter Polarität einzeln getrennt werden.

3. Verfahren zum Herstellen einer Lithium-Ionen-Batterie nach Anspruch 1 oder 2, wobei jeder Schritt b/ des Abwickelns von einem Aufroller am Auslass eines Rollenschneiders (6) erfolgt, auf den das zuvor zugeschnittene, durchgehende Band aufgewickelt wird.

4. Verfahren zum Herstellen einer Lithium-Ionen-Batterie nach Anspruch 1 bis 3, wobei jeder Schritt b/ des Abwickelns unter Aufrechterhaltung der Spannung des durchgehenden Separatorbandes (5) zwischen 0,5 und 3 N bei einer Dicke des letztgenannten zwischen 1 und 50 µm erfolgt.

5. Verfahren zum Herstellen einer Lithium-Ionen-Batterie nach einem der vorangehenden Ansprüche, wobei
- die Schritte a/ und a'/ mit einem Teil eines jeden Stromkollektors erfolgen, der von den Bereichen vorspringt, welche die Elektrodenmaterialien tragen, und dabei eine Zunge (10L) bildet,
- die Schritte c/ bis g/ mit den Zungen (10L) erfolgen, die in einer im Wesentlichen orthogonal zur Aufwickelrichtung des Separators verlaufenden Ebene angeordnet sind,
- nach erfolgtem Schritt g/ ein Schritt h/ erfolgt, im Laufe dessen sämtliche Zungen von Stromkollektoren von Elektroden gleicher Polarität zusammengeführt und miteinander verschweißt werden, wobei eine Zunge (7⁺, 7⁻) eine größere Dicke hat und die beiden Zungen größerer Dicke die Pole der Batterie bilden.

6. Verfahren zum Herstellen einer Lithium-Ionen-Batterie nach Anspruch 5, wobei nach erfolgtem Schritt h/ die Stapelung von Elektroden mit einer dichten Verpackung (8) umhüllt wird, wobei die Teile des elektrolytischen Separatorbandes zwei aneinandergrenzende Elektroden entgegengesetzter Polarität einzeln voneinander trennen und dabei die Pole (7⁺, 7⁻) durch die Verpackung treten lassen.

7. Lithium-Ionen-Batterie (A), die mit dem Verfahren nach Anspruch 6 erhalten wird, wobei sämtliche Elektroden mit negativer Polarität auf Basis von Graphit bestehen und sämtliche Elektroden mit positiver Polarität aus LiFePO4 bestehen.

8. Lithium-Ionen-Batterie (A), die mit dem Verfahren nach Anspruch 7 erhalten wird, wobei die beiden Pole so angeordnet sind, dass sie auf einer gleichen Seite der Verpackung vorspringen.

9. Lithium-Ionen-Batterie (A), die mit dem Verfahren nach Anspruch 7 erhalten wird, wobei die beiden Pole so angeordnet sind, dass sie jeweils auf einer anderen Seite der Verpackung vorspringen.

10. Lithium-Ionen-Batterie nach einem der Ansprüche 7 bis 9, wobei die Verpackung nachgiebig oder starr ausgeführt ist.

## Claims

1. A method for making a lithium-ion electrochemical accumulator, comprising the following steps:
a/ making a plurality of so-called two-sided electrodes, each comprising an electrically conducting substrate forming a current collector supporting on its two opposite faces an electrode material of same given polarity; the polarity of electrodes being divided into two groups, one of the groups comprising electrodes (30B⁺, 31B⁺, 32B⁺) with polarity opposite to those (30B⁻, 31B⁻) of the other group,
a'/ making two so-called one-sided electrodes, each comprising an electrically conducting substrate forming a current collector supporting on a single one of its faces an electrode material of given polarity, both one-sided electrodes (3M⁻, 3M⁻) supporting a single electrode material being of the same polarity,
b/ unwinding an electrolytic separator (5) in the form of a continuous strip from a winder (6) so as to position it on one edge (40) of a mandrel (4) with two parallel edges,
c/ manually positioning a first two-sided electrode (30B⁺) of one of the groups on the edge (41) of the mandrel parallel to the one on which (40) the continuous separator strip is already positioned,
d/ rotating the mandrel so as to wrap the first two-sided electrode of said group and the mandrel with the continuous separator strip,
e/ manually positioning a first two-sided electrode (30B⁻) of the other group on the edge of the mandrel on which the continuous separator strip is positioned,
f/ rotating the mandrel in the same direction as the one of step c/ so as to also wrap the first two-sided electrode of the other group with the continuous separator strip,
g/ repeating steps c/ to f/ with all the other electrodes (30B⁺, 31B⁺, 32B⁺, 30B⁻, 31B⁻, 3M⁻, 3M⁻) made according to steps a/ and a'/ so as to have the latter stacked on the mandrel with each of the one-sided electrodes laid out at one of the ends of the stack, all the electrodes being wrapped by the continuous separator strip, the latter (5) also separating two adjacent electrodes and of opposite polarity relatively to each other.

2. The method for making a lithium-ion accumulator according to claim 1, according to which, once step f/ is carried out, a step for removing the stack from the mandrel is carried out and then a step for cutting out the continuous separator strip at the periphery of the electrodes so as to only leave strip portions (50) on the one-sided electrode and to individually separate two adjacent electrodes (3M⁻, 3M⁻) and with opposite polarity relatively to each other.

3. The method for making a lithium-ion accumulator according to claim 1 or 2, according to which each unwinding step b/ is carried out from a winder at the output of a slitter-rewinder (6) on which the continuous strip slit beforehand is wound.

4. The method for making a lithium-ion accumulator according to claim 1 to 3, according to which each unwinding step b/ is carried out by maintaining the tension of the continuous separator strip (5) between 0.5 and 3 N for a thickness of the latter comprised 1 and 50µm.

5. The method for making a lithium-ion accumulator according to one of the preceding claims, according to which:
- steps a/ and a'/ are carried out with a portion of each current collector which protrudes from the areas supporting the electrode materials while forming a tab (10L),
- steps c/ to g/ are carried out with the tabs (10L) laid out in a plane substantially orthogonal to the winding direction of the separator,
- once step g/ is carried out, a step h/ is carried out during which all the tabs of current collectors of electrodes of a same polarity and with a tab (7⁺, 7⁻) of greater thickness are joined and welded together, both tabs of greater length forming the poles of the accumulator.

6. The method for making a lithium-ion accumulator according claim 5, according to which, once step h/ is carried out, the stack of the electrodes with the electrolytic separator strip portions individually separating two adjacent electrodes and of opposite polarity relatively to each other is wrapped in a leak-proof package (8), while letting the package be crossed by the poles (7⁺, 7⁻).

7. A Li-ion accumulator (A) obtained according to the method of claim 6, wherein all the electrodes with negative polarity are based on graphite and all the electrodes with positive polarity are in LiFePO4.

8. A Li-ion accumulator (A) obtained according to the method of claim 7, wherein both poles are laid out while protruding from a same side of the package.

9. A Li-ion accumulator (A) obtained according to the method of claim 7, wherein both poles are laid out each protruding from one different side of the package.

10. The Li-ion accumulator according to one of claims 7 to 9, wherein the package is of a flexible type or of the stiff type.
